# EUROPEAN PATENT APPLICATION

(11) **EP 4 542 321 A1**
(43) Date of publication of application: **23.04.2025**
(21) Application number: 23205049.2
(22) Date of filing: 20.10.2023
(51) Int. Cl.: G05B 23/02, B26B 19/00, B26B 21/00

(54) **INDICATING WHEN AN OPERATIONAL HEAD REQUIRES REPLACING**

(71) Applicant: Koninklijke Philips N.V., 5656 AG Eindhoven (NL)
(72) Inventor: KROEZEN, Arno, 5656 AG Eindhoven (NL); VAN DER SCHEER, Robbert Freerk Johan, 5656 AG Eindhoven (NL)
(74) Representative: Philips Intellectual Property & Standards

(57) **Abstract**

The subject-matter of the present disclosure relates to a computer-implemented method of indicating when an operational head of a personal care appliance requires replacing. The computer-implemented method comprises monitoring (602) an operational parameter sensed by a sensor of the personal care appliance, the operational parameter associated with operating the operational head, discarding (604) any values of the operational parameter below a threshold, and retaining any values of the operational parameter greater than or equal to the threshold, calculating (606) an accumulative use time based on the retained values of the operational parameter, determining (608) that the operational head needs replacing based on the accumulative use time, and sending (610) a signal indicating that the operational head needs to be replaced in response to the determining that the operational head needs to be replaced.

## Description

### FIELD OF THE INVENTION

The subject-matter of the present disclosure relates to computer-implemented methods of indicating when an operational head of a personal care appliance requires replacing, transitory or non-transitory computer-readable media, and personal care appliances.

### BACKGROUND OF THE INVENTION

Personal care appliances, such as hair cutting devices, often include a cutter. The cutter, when first installed to the personal care appliance, is sharp and cuts or shaves hair well. However, over time, the cutter or shaving device becomes blunter and requires replacing.

Generating a replacing signal for a user can be difficult because different users have different hair types. For example, one user may have a dense beard with thick hair. Another use may have a sparse beard with finer hair. The former will blunt the cutter more than the latter.

It is an aim of the subject-matter of the present disclosure to improve on the prior art.

### SUMMARY OF THE INVENTION

According to a first aspect of the present invention, there is provided a computer-implemented method of indicating when an operational head of a personal care appliance requires replacing. The computer-implemented method comprises monitoring an operational parameter sensed by a sensor of the personal care appliance, the operational parameter associated with operating the operational head, discarding any values of the operational parameter below a threshold, and retaining any values of the operational parameter greater than or equal to the threshold, calculating an accumulative use time based on the retained values of the operational parameter, determining that the operational head needs replacing based on the accumulative use time, and sending a signal indicating that the operational head needs to be replaced in response to the determining that the operational head needs to be replaced.

In an example, monitoring an operational parameter sensed by a sensor of the personal care appliance comprises measuring, using the sensor, real time values of the operational parameter, and subtracting the free-running value of the operational parameter from the real time values of the operational parameter.

In an example, subtracting the free-running value of the operational parameter from the real time values of the operational parameter comprises monitoring a real time free-running value of the operational parameter, and subtracting the real time free-running value of the operational parameter from the real time value of the operational parameter over time.

In an example, monitoring the real time free-running value of the operational parameter comprises determining the real time free-running value of the operational parameter by using a low-pass filter on the real time values of the operational parameter to discard values above a filter threshold, and/or calculating a moving minimum value from the real time values of the operational parameter, and/or calculating a moving nth percentile value from the real time values of the operational parameter.

In an example, prior to calculating an accumulative use time based on the retained values of the operational parameter, the computer-implemented method further comprises assigning each value of the monitored operational parameter to a bucket based on the value of the monitored operational parameter, and for each value, multiplying the time associated with the value by a weight associated with the bucket to which the value has been assigned to obtain a weighted time.

In an example, the bucket may be categorised as one of a high wear bucket, a normal wear bucket, and a low wear bucket.

In an example, calculating the accumulative use time based on the retained values of the operational parameter comprises adding the weighted time for each value to a time for all preceding values.

In an example the weight for the high wear bucket is higher than the weight for the normal wear bucket, and the weight for the normal wear bucket is higher than the weight for the low wear bucket.

In an example, the personal care appliance comprises a motor to operate the operational head, and wherein the operational parameter comprises power or current of the motor in operating the operational head.

In an example, the personal care appliance is a trimmer, and the operational head is a cutter, wherein each use is a shave.

In an example, sending a signal indicating that the operational head needs to be replaced when the determining that the operational head needs to be replaced comprises sending a signal to a display device to display a notification to a user to replace the operational head.

In an example, the display device is a remote device, or a display device mounted to the personal care appliance.

According to a second aspect of the invention, there is provided a transitory, or non-transitory, computer-readable medium, having instructions stored thereon that when executed by one or more processors, cause the one or more processors to perform the aforementioned computer-implemented method.

According to a third aspect of the invention, there is provided a personal care appliance comprising a handle, a sensor coupled to the handle, an attachment for attaching an operational head to the handle, and a controller having a processor and storage, wherein the storage has instructions stored thereon that, when executed by the processor, cause the processor to perform the aforementioned computer-implemented method.

These and other aspects of the present invention will be apparent from and elucidated with reference to the embodiment(s) described hereinafter.

### BRIEF DESCRIPTION OF THE DRAWINGS

The embodiments of the present inventions may be best understood with reference to the accompanying figures, in which:
Fig. 1 shows a block diagram of a personal care appliance according to one or more embodiments;
Fig. 2 shows a series of parameter values captured over time for respective new and worn operational heads of the personal care appliance;
Fig. 3 shows a graph for use in determining real time values of an operational parameter minus real time free running values of the operational parameter, according to one or more embodiments;
Fig. 4A shows a time series plot of the real time values when using the personal care appliance;
Fig. 4B shows the time series plot from Fig. 4A of real time values above a threshold;
Fig. 4C shows the time series plot from Fig. 4B after values below the threshold have been discarded and only values greater than or equal to the threshold have been retained;
Fig. 5 shows the time series plot from Fig. 4C including buckets; and
Fig. 6 shows a flow chart summarising a computer-implemented method of indicating when an operational head of a personal care appliance requires replacing.

### DETAILED DESCRIPTION OF THE EMBODIMENTS

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

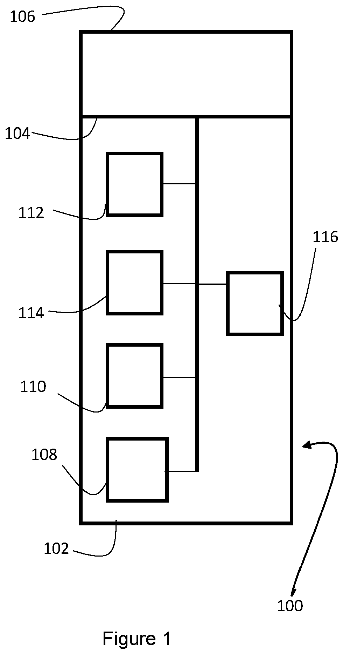

With reference to Fig. 1, a personal care appliance 100 according to one or more embodiments includes a handle 102, an attachment 104, an operational head 106, a power source 108, a controller 110, a motor 112, a sensor 114, and a display 116.

The personal care appliance 100 may be a hair removal appliance such as a trimmer or a shaver, for example. The operational head 106 is a device that performs and operation, e.g. hair removal. The operational head may be a trimmer. The trimmer includes a guard and a cutter. The cutter and the guard each comprise teeth which cut hair therebetween when the cutter moves reciprocally over the guard. Each use of the operational head may be considered a shave.

The attachment 104 attaches the operational head 106 to the handle 102.

The power source 108 may be a battery, e.g. a secondary, or rechargeable, battery.

The controller 110 may include storage and one or more processors. The storage includes electronic data in the form of instructions. The instructions, when executed by the one or more processors, may cause the one or more processors to perform the computer-implemented methods described herein. In this way, the storage may be non-transitory computer readable media. The instructions may also be provided as transitory computer-readable media when provided as a download to be stored on the storage.

The motor 112 may consume energy from the power source 108 when operating. This energy may be sensed by the sensor 114. The sensor sensed an operational parameter associated with operating the operational head. The operational parameter being current or power.

The display 116 may be mounted to an exterior surface of the handle 102 and communicatively linked to the controller so as to display indications generated by the controller.

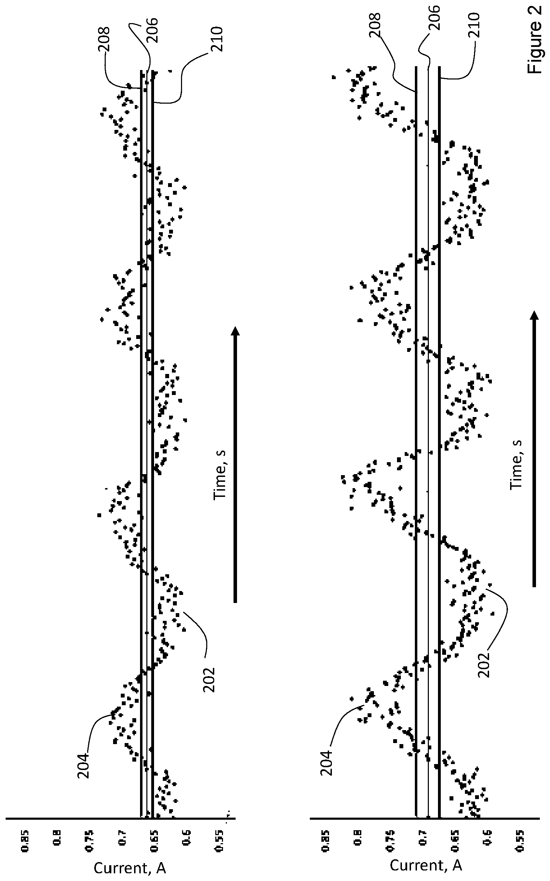

With reference to Fig. 2, both graphs show operational parameter values cycling between values associated with cutting hair and values associated with a free-running motor. The values of a free-running motor are associated with the troughs 202 and the values of cutting hair are associated with the peaks 204. Also shown on each graph is an average value line 206, a value plus 10% of the average value 208, and a value minus 10% of the average value 210. The upper figure is associated with a brand-new cutter. The lower figure is associated with a worn cutter. It can be seen that the amplitude between values associated with cutting hair and values associated with a free-running motor is larger for the worn cutting element, and therefore the +10% lines 208, 210, are farther apart.

Therefore, it can be seen that the operational parameter values can be used for determining when the operational head needs replacing since there are differences between worn and brand-new cutters.

Embodiments provide a computer-implemented method of indicating when an operational head of a personal care appliance requires replacing that addresses this need. The method includes monitoring an operational parameter sensed by a sensor of the personal care appliance, the operational parameter associated with operating the operational head; discarding any values of the operational parameter below a threshold, and retaining any values of the operational parameter greater than or equal to the threshold; calculating an accumulative use time based on the retained values of the operational parameter; determining that the operational head needs replacing based on the accumulative use time; and sending a signal indicating that the operational head needs to be replaced in response to the determining that the operational head needs to be replaced.

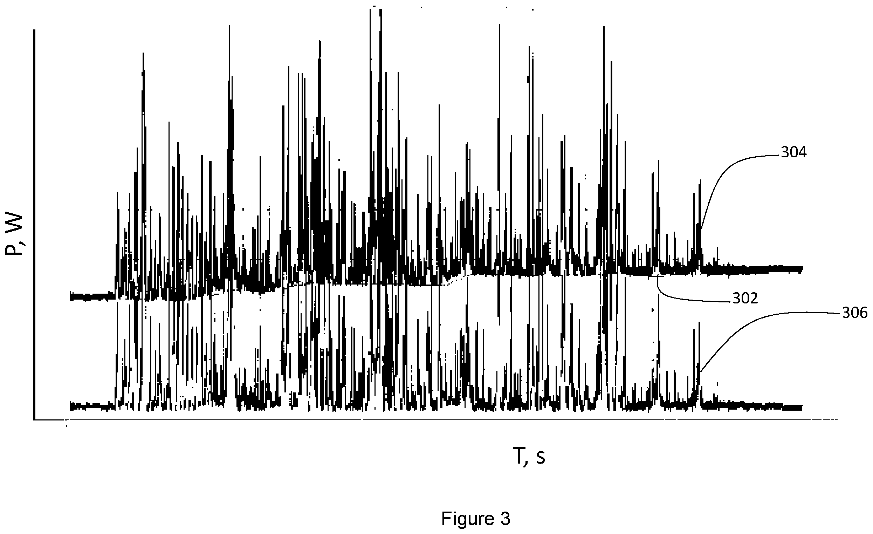

With reference to Fig. 3, the monitoring the operational parameter sensed by a sensor of the personal care appliance may comprise measuring, using the sensor, real time values 304 of the operational parameter; and subtracting the real time values of the operational parameter from a free-running value 302 of the operational parameter.

Subtracting the real time values of the operational parameter from the free-running value of the operational parameter comprises: monitoring a real time free-running value 302 of the operational parameter; and subtracting the real time value 304 of the operational parameter from the real time free-running value of the operational parameter over time. The result of the subtraction is the real time values 306. Using this method to obtain values of the operational parameter is more accurate because the free-running values are in real-time, i.e. they are continually updated rather than, for example, the free-running values being assumed to be constant.

It is possible to obtain the real-time free running value 302 in various ways. For instance, it is possible to determine the real time free-running value of the operational parameter by using a low-pass filter on the real time values 304 of the operational parameter to discard values above a threshold. The threshold may be set at what is known to be a free-running value of a motor for example. Another way is to calculate a moving minimum value from the real time values of the operational parameter. The moving minimum uses a time window which moves with time. A minimum real time value 304 in the window is obtained and is used as the real-time free running value 302. Another way is to calculate a moving nth percentile value from the real time values of the operational parameter. The nth percentile may be a 1st, 2nd or even a 3rd percentile, for example, although other percentiles may be used too.

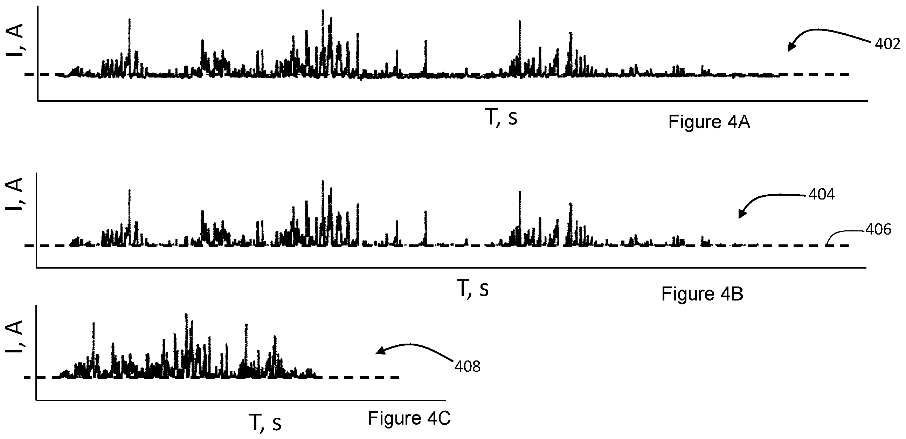

With reference to Fig. 4A, a time series plot 402 of values of the operational parameter is obtained for a use of the personal care appliance by monitoring the operational parameter.

With reference to Fig. 4B, the time series plot 404 is shown where the values are compared to a threshold 406. Any values of the operational parameter below the threshold are discarded. Any values of the operational parameter greater than or equal to the threshold are retained.

With reference to Fig. 4C, the time series plot 408 is condensed. In other words, the time series plot only shows values that are at or above the threshold with no gaps between them.

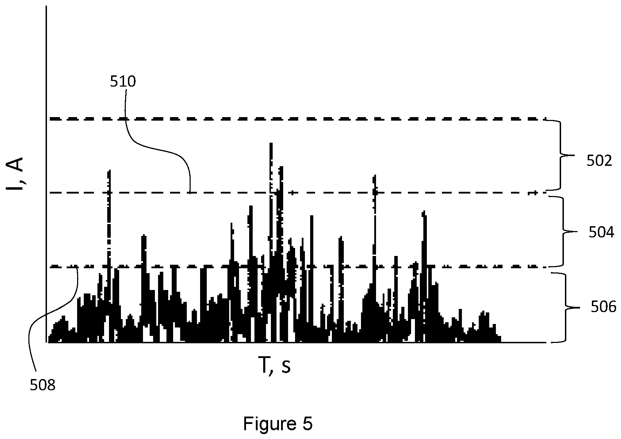

With reference to Fig. 5, prior to calculating the accumulative use time based on the retained values of the operational parameter, the computer-implemented method further comprises assigning each value of the monitored operational parameter to a bucket based on the value of the monitored operational parameter. Suitably, a bucket may be considered to be a collection of operational parameter data points between certain values.

Here, the bucket may be one of a high wear bucket 502, a normal wear bucket 504, and a low wear bucket 506. The buckets may be separated by bucket thresholds. The bucket thresholds may include two bucket thresholds. The two bucket thresholds may include a normal wear bucket threshold 508, and a high wear bucket threshold 510. The bucket thresholds may each correspond to a value of the operational parameter. The high wear bucket threshold 510 may be associated with a higher value of the operational parameter than the normal wear bucket threshold 508.

When a real time value of the operational parameter is less than the normal wear threshold 508, that real time value is assigned to the low wear bucket 502. When the real time value of the operational parameter is greater than the normal wear threshold 508 but less than the high wear bucket threshold 510, that real time value is assigned to the normal wear bucket 504. When the real time value of the operational parameter is greater than the high wear bucket threshold 510, that real time value is assigned to the high wear bucket. It should be noted that each value is obtained from a sample obtained when monitoring the operational parameter. A time duration of the value may be the time between samples. Therefore, it is possible to determine an amount of time within each bucket.

For each value, the time associated with the value may be multiplied by a weight associated with the bucket to which the value has been assigned to obtain a weighted time. In other words, there may be a high wear weight associated with the high wear bucket. There may be a normal wear weight associate with the normal wear bucket. There may be a low wear weight associated with the low wear bucket. The weight for the high wear bucket may be higher than the weight for the normal wear bucket. The weight of the normal wear bucket may be higher than the weight for the low wear bucket. For example, the weight for the low wear bucket may be 1, the weight for the normal wear bucket may be 1.5, and the weight for the high wear bucket may be 2. These values of provided for illustrative purposes since those values may be different in other embodiments. For example, the weight for the low wear bucket may be 0.5, the weight for the normal wear bucket may be 1, and the weight for the high wear bucket may be 1.5.

The step of calculating the accumulative use time based on the retained values of the operational parameter may comprise adding the time period associated with a value, e.g. the time between values or samples, to the time for all previous values. When using the buckets approach, this may become adding the weighted time for each value to the time, or weighted time, for all preceding values.

This is important because high wear values blunted the cutter quicker than normal and low wear values. Therefore, whenever a high wear value is calculated, the time to the threshold is effectively reduced. It should be appreciated that as the cutter is used, the values will likely migrate to higher wear buckets. This is because the motor will need to work harder with a blunt cutter than a sharp cutter.

Finally, the sensing the signal indicating that the operational head needs to be replaced when the determining that the operational head needs to be replaced comprises sending a signal to the display 116 (Fig. 1) to display a notification to a user to replace the operational head. The display in Fig. 1 is a display mounted to the personal care appliance but the display may also be a display of a remote device.

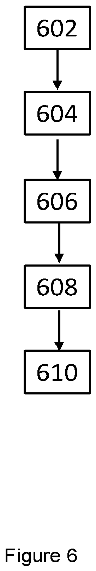

With reference to Fig. 6, the computer-implemented method of indicating when an operational head of a personal care appliance requires replacing can be summarised as: monitoring 602 an operational parameter sensed by a sensor of the personal care appliance, the operational parameter associated with operating the operational head; discarding 604 any values of the operational parameter below a threshold, and retaining any values of the operational parameter greater than or equal to the threshold; calculating 606 an accumulative use time based on the retained values of the operational parameter; determining 608 that the operational head needs replacing based on the accumulative use time; and sending 610 a signal indicating that the operational head needs to be replaced in response to the determining that the operational head needs to be replaced.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A computer-implemented method of indicating when an operational head of a personal care appliance requires replacing, the computer-implemented method comprising:
monitoring (602) an operational parameter sensed by a sensor of the personal care appliance, the operational parameter associated with operating the operational head;
discarding (604) any values of the operational parameter below a threshold, and retaining any values of the operational parameter greater than or equal to the threshold;
calculating (606) an accumulative use time based on the retained values of the operational parameter;
determining (608) that the operational head needs replacing based on the accumulative use time; and
sending (610) a signal indicating that the operational head needs to be replaced in response to the determining that the operational head needs to be replaced.

2. The computer-implemented method of Claim 1, wherein the monitoring an operational parameter sensed by a sensor of the personal care appliance comprises:
measuring, using the sensor, real time values (404) of the operational parameter; and
subtracting the free-running value (402) of the operational parameter from the real time values of the operational parameter.

3. The computer-implemented method of Claim 2, wherein the subtracting the free-running value of the operational parameter from the real time values of the operational parameter comprises:
monitoring a real time free-running value of the operational parameter; and
subtracting the real time free-running value of the operational parameter from the real time value of the operational parameter over time.

4. The computer-implemented method of Claim 3, wherein the monitoring the real time free-running value of the operational parameter comprises determining the real time free-running value of the operational parameter by:
using a low-pass filter on the real time values of the operational parameter to discard values above a filter threshold; and/or
calculating a moving minimum value from the real time values of the operational parameter; and/or
calculating a moving nth percentile value from the real time values of the operational parameter.

5. The computer-implemented method of any preceding claim, wherein prior to calculating an accumulative use time based on the retained values of the operational parameter, the computer-implemented method further comprises:
assigning each value of the monitored operational parameter to a bucket based on the value of the monitored operational parameter; and
for each value, multiplying the time associated with the value by a weight associated with the bucket to which the value has been assigned to obtain a weighted time.

6. The computer-implemented method of Claim 5, wherein the bucket is categorised as one of a high wear bucket, a normal wear bucket, and a low wear bucket.

7. The computer-implemented method of Claim 5 or Claim 6, wherein the calculating the accumulative use time based on the retained values of the operational parameter comprises:
adding the weighted time for each value to a time for all preceding values.

8. The computer-implemented method of Claim 6 or Claim 7, wherein the weight for the high wear bucket is higher than the weight for the normal wear bucket, and the weight for the normal wear bucket is higher than the weight for the low wear bucket.

9. The computer-implemented method of any preceding claim, wherein the personal care appliance comprises a motor (112) to operate the operational head, and wherein the operational parameter comprises power or current of the motor in operating the operational head.

10. The computer-implemented method of any preceding claim, wherein the personal care appliance is a trimmer, and the operational head is a cutter, wherein each use is a shave.

11. The computer-implemented method of any preceding claim, wherein the sending a signal indicating that the operational head needs to be replaced when the determining that the operational head needs to be replaced comprises sending a signal to a display device (116) to display a notification to a user to replace the operational head.

12. The computer-implemented method of Claim 11, wherein the display device is a remote device, or a display device mounted to the personal care appliance.

13. A transitory, or non-transitory, computer-readable medium, having instructions stored thereon that when executed by one or more processors, cause the one or more processors to perform the computer-implemented method of any preceding claim.

14. A personal care appliance (100) comprising:
a handle (102);
a sensor (114) coupled to the handle;
an attachment (104) for attaching an operational head (106) to the handle; and
a controller (110) having a processor and storage, wherein the storage has instructions stored thereon that, when executed by the processor, cause the processor to perform the computer-implemented method of any of Claims 1 to 12.
